# EUROPÄISCHE PATENTANMELDUNG

(11) **EP 0 769 838 A1**
(43) Veröffentlichungstag der Anmeldung: **23.04.1997**
(21) Anmeldenummer: 96116587.5
(22) Anmeldetag: 16.10.1996
(51) Int. Cl.: H02K 3/38, H02K 15/12, H02K 3/50

(54) **Ein- oder mehrteilige Isolierkappe für Stabverbindungen an Wicklungen drehender elektrischer Maschinen**

(30) Priorität: 17.10.1995 DE 19538631
(71) Anmelder: VEM-Elektroantriebe GmbH, 01242 Dresden (DE)
(72) Erfinder: Kielmann,Frieder,Dr.-Ing., 01277 Dresden (DE); Schönthier,Heinz,Dr.-Ing., 01309 Dresden (DE); Zima,Hans, 01277 Dresden (DE)
(74) Vertreter: Weissfloh, Ingo

(57) **Zusammenfassung**

Der Erfindung liegt das Problem zugrunde, eine Isolierkappe zu schaffen, die beim Aufschieben der Isolierkappe auf die Stabverbindung automatisch überall die gleiche Schichtdicke nach dem Vergießen besitzt und die Montage der Isolierkappe wesentlich vereinfacht. Gleichzeitig sollen noch zusätzlich Kühleffekte im Bereich des Wickelkopfes erreicht werden.

Das Problem wird dadurch gelöst, daß die Isolierkappe 1 mehrere nach innen gerichtete Positionierhilfen 2 besitzt und diese Positionierhilfen 2 sich auf der Leiterisolierung 5 linienförmig abstützen und verschiedene Ausführungsformen (3 und 4) besitzen können. Die Ausführungsform als linienförmige Prägung 4 in der Wand der Isolierkappe 1 ermöglicht die Bildung eines Kühlkanales 6.
Das Anwendungsgebiet der Erfindung ist der Elektromaschinenbau.

## Beschreibung

### Stand der Technik

Die Erfindung bezieht sich auf eine Isolierkappe mit den Merkmalen des Oberbegriffs des Anspruches 1.
Die Verwendung solcher Isolierkappen im Bereich der Stabverbindungen der Ständerwicklung drehender elektrischer Maschinen zum Zwecke der Isolation und der Aufnahme von Gießharz, ist aus den Schriften DE 28 36 230 C2 und DE 42 05 168 C1 bekannt. Während die in der DE 28 36 230 C2 verwendete Isolierkappe aus einem Teil besteht, besteht die Isolierkappe der DE 42 05 168 C1 aus mehreren strangezogenen, miteinander verbundenen Einzelteilen.

### Kritik des Standes der Technik

Bei der Montage der Isolierkappen und beim Vergießen der Hohlräume innerhalb der Isolierkappe mittels einer Vergußmasse muß vom Montagepersonal ein sehr großer Aufwand betrieben werden, um die Isolierkappe mittig anzuordnen und damit um die Stabverbindung herum eine überall gleiche Schichtdicke zu erreichen. Die Qualität der fertigen und vergossenen Isolierkappe ist im großen Maße von der Fertigkeit des Montagepersonals abhängig.

### Problem

Der Erfindung liegt das Problem zugrunde, eine Isolierkappe zu schaffen, die beim Aufschieben der Isolierkappe auf die Stabverbindung automatisch überall die gleiche Schichtdicke nach dem Vergießen besitzt und die Montage der Isolierkappe wesentlich vereinfacht. Die Lösung dieses Problems erfolgt durch die Merkmale des Anspruchs 1.

### Erzielbare Vorteile

Mit der Erfindung wird eine überall gleiche Schichtdicke um die Stabverbindung in der Ständerwicklung nach der Montage und dem Vergießen mit einer Vergußmasse erreicht. Dadurch kann die Wandstärke der Isolierkappe auf ein Minimum reduziert werden.
Das Erreichen der gleichen Schichtdicke ist nicht mehr vom Geschick des Montagepersonals abhängig. Die Stabverbindungen befinden sich immer mittig innerhalb der Isolierkappe. Es wird allseitig ein gleichdicker Verguß gewährleistet.

Bei einer entsprechenden Größenwahl der Isolierkappen wird ein in sich geschlossener Isolierkappenring erreicht, der insgesamt die Stabilität und Isolatonssicherheit erhöht.

Durch eine spezielle Formgebung der Isolierkappe kann außerdem zusätzlich ein Kühleffekt zwischen den Isolierkappen erreicht werden, indem Kühlkanäle mit einer Zwangsluftführung durch die Formgebung gebildet werden.

### Ausführungsbeispiel

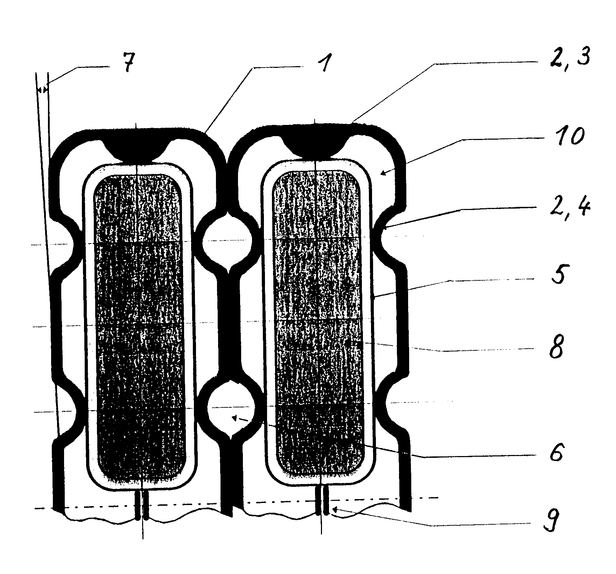

Ein Ausführungsbeispiel der Erfindung ist in der Zeichnung dargestellt und wird im folgenden näher beschrieben.
Die Zeichnung zeigt die Schnittdarstellung durch eine halbe Stabverbindung. Die Bruchlinie an der Symmetrielinie deutet an, daß eine spiegelbildliche Darstellung unterhalb der Bruchlinie folgt.
Die erfindungsgemäße Isolierkappe 1 ist der Größe der Stabverbindung 9 und damit der sie umgebenden Teilleiter des Roebelstabes 8 im Wickelkopf einschließlich der Leiterisolierung 5 angepaßt. Die Isolierkappe 1 kann einoder mehrteilig ausgeführt sein. So kann z.B. der Kappenboden ein gesondertes Teil sein, welches mit bereits bekannten Elementen versehen, eine feste Verbindung zur übrigen Isolierkappe 1 garantiert. Der Grundgedanke der Erfindung besteht darin, daß die Wände und der Boden der Isolierkappe nach innen gerichtete Positionierhilfen 2 besitzt, die sich linienförmig auf der Leiterisolierung 5 abstützen und damit immer eine mittige Lage der Teilleiter des Roebelstabes 8 und damit der Stabverbindung 9 gegeben ist. Die Positionierhilfen 2 können als linienförmige Wülste 3 und/oder als linienförmige Prägungen 4 der Wände und des Bodens der Isolierkappe 1 ausgebildet sein. Im Boden- und im Wandbereich an der Schmalseite der Teilleiter des Roebelstabes 8 werden vorzugsweise die linienförmigen Wülste 3 eingesetzt, im Wandbereich der Isolierkappe 1 zu einer benachbarten Isolierkappe 1 die linienförmigen Prägungen 4, vorzugsweise mit dem Querschnitt eines Halbkreises. Nebeneinander liegende Isolierkappen 1 bilden durch Opposition von zwei gegenüberliegenden Positionierhilfen 2 einen Kühlkanal 6. Durch eine Schrägstellung der Kühlkanäle 6, also in einem von 90° abweichenden Winkel zwischen dem Boden und der Öffnung der Isolierkappe 1, oder durch andere geeignete Hilfsmittel, wie z.B. am Kühlkanaleingang angebrachte Luftschaufeln, kann eine zwangsweise Luftführung durch die Kühlkanäle 6 im Betrieb der Maschine erreicht werden. Für eine Erleichterung der Montage der Isolierkappen 1 und zur Vermeidung einer Beschädigung der Leiterisolierung 5 beim Aufschieben der Isolierkappe, sind die Ränder der Isolierkappe 1 an der Kappenöffnung innen angeschrägt.

Die Isolierkappen 1 besitzen im Normalfall jeweils an den Seiten zur benachbarten Isolierkappe eine Schräge 7, die einen trapezförmigen Querschnitt der Isolierkappe 1 ergibt und eine solche Größe, daß die einzelnen Isolierkappen 1 formschlüssig aneinander anliegen und in ihrer Summe einen geschlossenen Isolierkappenring im Bereich des Wickelkopfes der elektrischen Maschine bilden.

Nach der Montage der Isolierkappen 1 werden die Hohlräume zwischen der Leiterisolierung 5 und der Isolierkappe 1 mit Vergußmasse 10 vergossen.

In Bereichen des Phasensprunges kann es bei einzelnen Maschinentypen infolge erhöhter elektrischer Beanspruchung angebracht sein, daß die Kühlkanäle 6 mit einem Isolierstoff gefüllt werden.

## Patentansprüche

1. Ein- oder mehrteilige Isolierkappe für Stabverbindungen an Wicklungen drehender elektrischer Maschinen, die gleichzeitig als verlorene Form für das Vergießen mit Vergußmasse dient,
dadurch gekennzeichnet,
daß die Isolierkappe (1) mehrere nach innen gerichtete Positionierhilfen (2) besitzt, die als linienförmige Wülste (3) und/oder linienförmige Prägungen (4) der Wände und des Bodens der Isolierkappe (1) ausgebildet sind, so daß nach der Montage der Isolierkappe (1) nur eine linienförmige Berührung zwischen der Isolierkappe (1) an den Wülsten (3) und/oder den Prägungen (4) und der Leiterisolierung (5) der Stabverbindung gegeben ist.

2. Isolierkappe nach Anspruch 1,
dadurch gekennzeichnet,
daß die Positionierhilfe (2) als linienförmige Prägung (4) im Querschnitt vorzugsweise als Halbkreis ausgebildet ist und durch Opposition von zwei gegenüberliegenden Positionierhilfen (2) benachbarter Isolierkappen (1) ein Kühlkanal (6) gebildet wird.

3. Isolierkappe nach Anspruch 2,
dadurch gekennzeichnet,
daß durch Schrägstellung des Kühlkanales (6), also in einem von 90° abweichenden Winkel zwischen dem Boden und der Öffnung der Isolierkappe (1), oder durch andere bekannte Hilfsmittel eine zwangsweise Luftführung durch den Kühlkanal (6) erwirkt wird.

4. Isolierkappe nach Anspruch 2 oder 3,
dadurch gekennzeichnet,
daß spezielle Kühlkanäle (6) mit Isolierstoff verfüllt sind.

5. Isolierkappe nach einem der Ansprüche 1 bis 4,
dadurch gekennzeichnet,
daß die Ränder der Isolierkappe (1) an der Kappenöffnung innen angeschrägt sind.

6. Isolierkappe nach einem der Ansprüche 1 bis 5,
dadurch gekennzeichnet,
daß die Isolierkappen (1) jeweils an den Seiten zur benachbarten Isolierkappe (1) eine Schräge (7) besitzen und mit ihrem dadurch trapezförmigen Querschnitt so ausgebildet sind, daß benachbarte Isolierkappen (1) formschlüssig aneinander liegen und somit in ihrer Summe einen geschlossenen Isolierkappenring bilden.
